# EUROPEAN PATENT APPLICATION

(11) **EP 4 650 711 A1**
(43) Date of publication of application: **19.11.2025**
(21) Application number: 25169316.4
(22) Date of filing: 09.04.2025
(51) Int. Cl.: G01C 15/00

(54) **SURVEYING DEVICE**

(30) Priority: 15.05.2024 JP 2024079432
(71) Applicant: Topcon Corporation, Tokyo 174-8580 (JP)
(72) Inventor: YUASA, Taichi, Tokyo-to, 174-8580 (JP)
(74) Representative: Louis Pöhlau Lohrentz

(57) **Abstract**

Problem

Provided is a surveying device that shortens measurement time.

Solution

Included are a distance measuring unit 19 including a light projecting unit 28 configured to emit distance measuring light and a light receiving unit 31 configured to receive reflected distance measuring light from an object to be measured, a deflecting optical member configured to be rotated in a vertical direction via a vertical rotation shaft 11 that is hollow, a vertical rotation drive unit 13 configured to rotate the deflecting optical member in the vertical direction, a frame unit 5 in which the deflecting optical member is provided, a horizontal rotation drive unit 8 configured to rotate the frame unit in a horizontal direction, an imaging unit 21 capable of imaging an image of the object to be measured based on external light passing through an interior of the vertical rotation shaft, and a computation control unit 17 configured to compute a distance to the object to be measured based on a result of reception of the reflected distance measuring light into the light receiving unit. The distance measuring unit and the imaging unit are disposed at positions facing each other with the deflecting optical member interposed therebetween. The deflecting optical member has two reflective surfaces for reflecting the distance measuring light, the reflected distance measuring light, and the external light at right angles. The computation control unit simultaneously executes distance measurement via one of the two reflective surfaces and imaging via the other of the two reflective surfaces.

## Description

### Technical Field

The present invention relates to a surveying device capable of acquiring three-dimensional point cloud data and an image of an object to be measured.

### Background Art

Examples of a surveying device for acquiring a profile and three-dimensional point cloud data of an object to be measured include a three-dimensional laser scanner. There is also a laser scanner with a camera incorporated or externally attached as a surveying device, and by using the laser scanner and the camera, an image with three-dimensional coordinates can be acquired.

Unfortunately, the known surveying device separately executes the measurement by the laser scanner and imaging by the camera, thus fails to execute one process until the other process is completed, making measurement time longer.

### Citation List

### Patent Literature

Patent Document 1: JP 2021-117013 A

### SUMMARY

### Technical Problem

The present invention provides a surveying device that shortens measurement time.

### Solution to Problem

An aspect of the present invention is a surveying device including a distance measuring unit including a light projecting unit configured to emit distance measuring light and a light receiving unit configured to receive reflected distance measuring light from an object to be measured, a deflecting optical member configured to be rotated in a vertical direction via a vertical rotation shaft that is hollow, a vertical rotation drive unit configured to rotate the deflecting optical member in the vertical direction, a frame unit in which the deflecting optical member is provided, a horizontal rotation drive unit configured to rotate the frame unit in a horizontal direction, an imaging unit capable of imaging an image of the object to be measured based on external light passing through an interior of the vertical rotation shaft, and a computation control unit configured to compute a distance to the object to be measured based on a result of reception of the reflected distance measuring light into the light receiving unit. The distance measuring unit and the imaging unit are disposed at positions facing each other with the deflecting optical member interposed therebetween. The deflecting optical member has two reflective surfaces for reflecting the distance measuring light, the reflected distance measuring light, and the external light at right angles. The computation control unit simultaneously executes distance measurement via one of the two reflective surfaces and imaging via the other of the two reflective surfaces.

A preferred aspect of the present invention is the surveying device, wherein the distance measuring unit and the imaging unit are disposed to cause a point cloud acquisition origin of the distance measuring unit to coincide or substantially coincide with an entrance pupil position of the imaging unit.

A preferred aspect of the present invention is the surveying device, wherein the distance measuring unit further includes a beam splitter configured to transmit the distance measuring light and reflect the reflected distance measuring light.

A preferred aspect of the present invention is the surveying device further including a second concave lens configured to reduce a diameter of the external light, wherein an imaging range of the imaging unit is enlarged via the second concave lens.

A preferred aspect of the present invention is the surveying device further including a first concave lens configured to increase a diameter of the distance measuring light wherein a measurement range of the distance measuring unit is enlarged via the first concave lens.

A preferred aspect of the present invention is the surveying device, wherein the first concave lens and the second concave lens are each disposed closer to the object to be measured than the deflecting optical member and rotate integrally with the deflecting optical member.

A preferred aspect of the present invention is the surveying device, wherein the first concave lens and the second concave lens are each disposed closer to a light receiving side than the deflecting optical member.

A preferred aspect of the present invention is the surveying device, wherein the first concave lens and the second concave lens rotate integrally with the deflecting optical member.

A preferred aspect of the present invention is the surveying device, wherein the distance measuring unit is a two-dimensional distance measuring sensor capable of acquiring distance measurement data in a planar manner.

A preferred aspect of the present invention is the surveying device, wherein the distance measuring sensor is a flash LiDAR, and the light projecting unit includes at least one light emitting element configured to emit the distance measuring light.

A preferred aspect of the present invention is the surveying device, wherein the light projecting unit further includes an MEMS mirror capable of deflecting the distance measuring light in two axial directions.

A preferred aspect of the present invention is the surveying device, wherein the deflecting optical member is a rectangular prism obtained by joining two triangular prisms, and respective reflective surfaces are formed on front and back surfaces of a joint surface of the rectangular prism.

A preferred aspect of the present invention is the surveying device, wherein the deflecting optical member is a triangular prism having a right-angled isosceles triangle shape, and respective reflective surfaces are formed on front and back surfaces of the triangular prism on its long side.

A preferred aspect of the present invention is the surveying device, wherein the deflecting optical member is a mirror having a plate shape, and respective reflective surfaces are formed on front and back surfaces of the mirror.

Further, an advantageous aspect of the present invention is the surveying device, wherein a recessed portion in which the deflecting optical member is housed is formed in the frame unit, and a tapered portion cut in a tapered shape is formed at an edge portion of the recessed portion.

### Advantageous Effects of Invention

An aspect of the present invention includes a distance measuring unit including a light projecting unit configured to emit distance measuring light and a light receiving unit configured to receive reflected distance measuring light from an object to be measured. a deflecting optical member configured to be rotated in a vertical direction via a vertical rotation shaft that is hollow, a vertical rotation drive unit configured to rotate the deflecting optical member in the vertical direction, a frame unit in which the deflecting optical member is provided, a horizontal rotation drive unit that rotates the frame unit in a horizontal direction, an imaging unit capable of imaging an image of the object to be measured based on external light passing through an interior of the vertical rotation shaft, and a computation control unit configured to compute a distance to the object to be measured based on a result of reception of the reflected distance measuring light into the light receiving unit. The distance measuring unit and the imaging unit are disposed at positions facing each other with the deflecting optical member interposed therebetween. The deflecting optical member has two reflective surfaces for reflecting the distance measuring light, the reflected distance measuring light, and the external light at right angles. The computation control unit simultaneously executes distance measurement via one of the two reflective surfaces and imaging via the other of the two reflective surfaces. This has advantageous effects of being able to simultaneously execute the measurement and the imaging, shorten measurement time, eliminate or significantly reduce parallax between the distance measuring unit and the imaging unit, and improve coloring accuracy of a point cloud.

### BRIEF DESCRIPTION OF DRAWINGS

FIG. 1 is a front cross-sectional view illustrating a surveying device according to a first example.
FIG. 2 is a plan cross-sectional view illustrating the surveying device according to the first example.
FIG. 3 is an explanatory view illustrating an optical system of a distance measuring unit and an imaging unit according to a second example.
In FIG. 4, (A) is an explanatory view illustrating an optical system of the distance measuring unit and the imaging unit according to a third example, and (B) is a view seen from an arrow A in (A).
In FIG. 5, (A) is an explanatory view illustrating an optical system of the distance measuring unit and the imaging unit according to a modified example of the third example, and (B) is a view seen from an arrow B in (A).
In FIG. 6, (A) is an explanatory view illustrating an optical system of the distance measuring unit and the imaging unit according to a fourth example, and (B) is a view seen from an arrow C in (A).
In FIG. 7, (A) is an explanatory view illustrating an optical system of the distance measuring unit and the imaging unit according to a fifth example, and (B) is a view seen from an arrow D in (A).
In FIG. 8, (A) is an explanatory view illustrating an optical system of the distance measuring unit and the imaging unit according to a sixth example, and (B) is a view seen from an arrow E in (A).
FIG. 9 is an explanatory view illustrating an optical system of the distance measuring unit and the imaging unit according to a seventh example.

### DESCRIPTION OF EMBODIMENTS

Examples of the present invention will be described next with reference to the drawings.

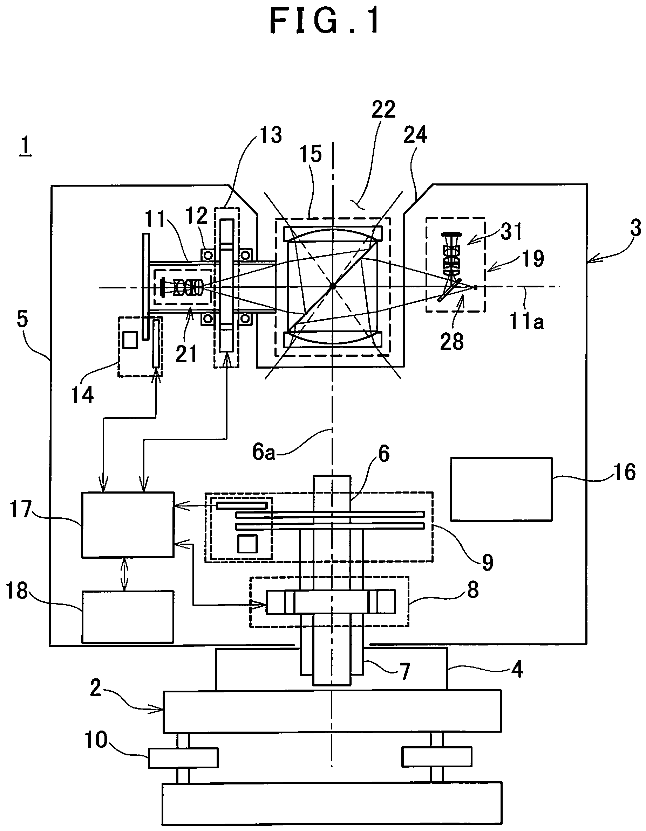

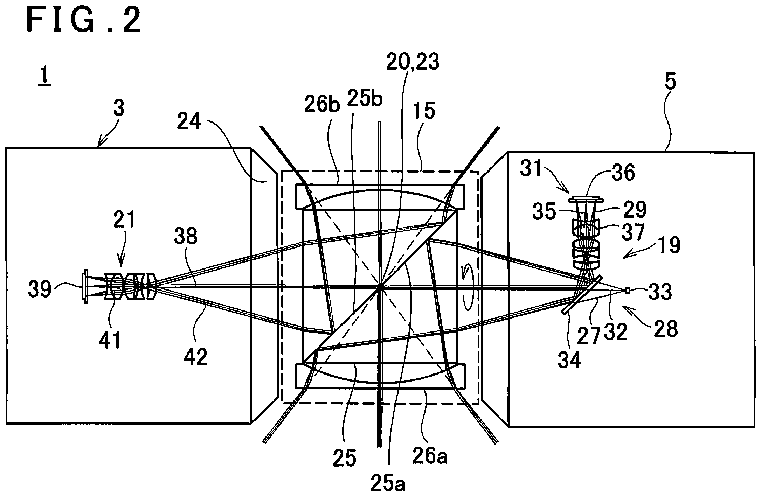

A surveying device according to a first example of the present invention will be described with reference to FIGS. 1 and 2.

A surveying device 1 is, for example, a laser scanner and includes a leveling unit 2 attached to a tripod (not illustrated), and a surveying device main body 3 attached to the leveling unit 2.

The leveling unit 2 includes a leveling screw 10. The leveling screw 10 horizontally levels the surveying device main body 3.

The surveying device main body 3 includes (houses) a fixing unit 4, a frame unit 5, a horizontal rotation shaft 6, a horizontal rotation bearing 7, a horizontal rotation motor 8 as a horizontal rotation drive unit, a horizontal angle encoder 9 as a horizontal angle detection unit, a vertical rotation shaft 11, a vertical rotation bearing 12, a vertical rotation motor 13 as a vertical rotation drive unit, a vertical angle encoder 14 as a vertical angle detection unit, a rotation unit 15, an operation panel 16 serving as both an operating unit and a display unit, a computation control unit 17, a storage unit 18, a distance measuring unit 19, and an imaging unit 21. A CPU specialized for this device or a general-purpose CPU is used as the computation control unit 17.

The horizontal rotation bearing 7 is fixed to the fixing unit 4. The horizontal rotation shaft 6 has a vertical shaft center 6a. The horizontal rotation bearing 7 rotatably supports the horizontal rotation shaft 6. The horizontal rotation shaft 6 supports the frame unit 5. The frame unit 5 rotates integrally with the horizontal rotation shaft 6 in the horizontal direction.

The horizontal rotation motor 8 is provided between the horizontal rotation bearing 7 and the frame unit 5. The computation control unit 17 controls the horizontal rotation motor 8. The computation control unit 17 causes the horizontal rotation motor 8 to rotate the frame unit 5 about the shaft center 6a.

The horizontal angle encoder 9 detects a relative rotation angle of the frame unit 5 with respect to the fixing unit 4. A detection signal from the horizontal angle encoder 9 is input to the computation control unit 17. The computation control unit 17 computes horizontal angle data. The computation control unit 17 performs feedback control on the horizontal rotation motor 8, based on the horizontal angle data.

The frame unit 5 includes the vertical rotation shaft 11 having a horizontal shaft center 11a. The vertical rotation shaft 11 is rotatable via the vertical rotation bearing 12. A point of intersection between the shaft center 6a and the shaft center 11a is an injection position of distance measuring light and is a mechanical center of the surveying device main body 3, that is, an origin (a point cloud acquisition origin) of a coordinate system.

A recessed portion 22 is formed in the frame unit 5. The vertical rotation shaft 11 is hollow. One end portion of the vertical rotation shaft 11 extends into the recessed portion 22. The rotation unit 15 is fixed to the one end portion of the vertical rotation shaft 11. The rotation unit 15 is housed in the recessed portion 22 and rotates integrally with the vertical rotation shaft 11.

Tapered portions 24 cut in a tapered shape are formed at edge portions of the recessed portion 22 on the upper side, front surface side, and rear surface side. The tapered portions 24 are formed on both sides with the rotation unit 15 interposed therebetween. The tapered portions 24 do not block a measurement range of the distance measuring unit 19 and an imaging range of the imaging unit 21. An angle of the tapered portion 24 is appropriately designed in accordance with angles of view of the distance measuring unit 19 and the imaging unit 21.

The rotation unit 15 includes a reflection prism 25 as a deflecting optical member. The rotation unit 15 includes two concave lenses 26a and 26b as wide-angle optical members. The reflection prism 25 is a rectangular prism that is formed by joining two triangular prisms and is substantially cubic, making a joint surface of each of the two triangular prisms a reflective surface. The respective reflective surfaces are formed on front and back surfaces of the joint surface, making the reflection prism 25 a prism having two reflective surfaces 25a and 25b.

The concave lenses 26a and 26b are each parallel to the shaft center 11a and are provided adjacent to the surfaces of the reflection prism 25 facing the reflective surfaces 25a and 25b. In other words, the concave lenses 26a and 26b are disposed closer to an object to be measured than the reflection prism 25. The concave lenses 26a and 26b are concave lenses whose surfaces facing the reflection prism 25 are concave. The reflective surface 25a on the front surface side faces the first concave lens 26a. The reflective surface 25b on the back surface side faces the second concave lens 26b.

The concave lenses 26a and 26b may be a single lens or a lens group in which a plurality of lenses are combined. The first concave lens 26a and the second concave lens 26b are lenses having the same focal distance and are disposed so that respective focal positions coincide with each other.

The vertical angle encoder 14 is provided at another end portion of the vertical rotation shaft 11. The imaging unit 21 is provided inside the vertical rotation shaft 11. An optical axis of the imaging unit 21 coincides with the shaft center 11a. The position of the imaging unit 21 is set according to the focal distance of the imaging unit 21. For example, when the imaging unit 21 having a long focal distance is used, the imaging unit 21 is provided at a position away from the other end portion of the vertical rotation shaft 11, that is, outside the vertical rotation shaft 11.

The distance measuring unit 19 is provided on the opposite side of the imaging unit 21 with the reflection prism 25 in between. The distance measuring unit 19 is, for example, a flash light detection and ranging (LiDAR) capable of acquiring distance measurement data in a planar manner. The distance measuring unit 19 includes a light projecting unit 28 that emits a distance measuring light 27, and a light receiving unit 31 that receives a reflected distance measuring light 29 reflected by the object to be measured. Other two-dimensional sensors, such as a TOF camera, may be used as the distance measuring unit 19.

The vertical rotation motor 13 is provided on the vertical rotation shaft 11. The computation control unit 17 controls the vertical rotation motor 13. The computation control unit 17 causes the vertical rotation motor 13 to rotate the vertical rotation shaft 11. Thus, the rotation unit 15, that is, the reflection prism 25 and the concave lenses 26a and 26b, are rotated around the shaft center 11a.

The rotation angle of the reflection prism 25 is detected by the vertical angle encoder 14. A detection signal is input to the computation control unit 17. The computation control unit 17 computes vertical angle data of the rotation unit 15 based on the detection signal and performs feedback control on the vertical rotation motor 13 based on the vertical angle data.

The horizontal angle data, the vertical angle data and the measurement results computed by the computation control unit 17 are saved in the storage unit 18. Various storage means, such as an HDD as a magnetic storage device, a CD or a DVD as an optical storage device, a memory card as a semiconductor storage device, and a USB memory are used as the storage unit 18. The storage unit 18 may be attachable to and detachable from the frame unit 5 or may be capable of transmitting data to an external storage device or an external data processing device via communication means (not illustrated).

The storage unit 18 stores various programs, such as a sequence program for controlling a distance measuring operation, a computation program for computing the distance by the distance measuring operation, a computation program for computing the angle based on the horizontal angle data and the vertical angle data, a program for computing the three-dimensional coordinates of a desired measuring point based on the distance and the angle, an imaging program for controlling an imaging operation by the imaging unit 21, a point cloud data creation program for creating three-dimensional point cloud data of a full 360° circumference based on the measurement (distance measurement and angle measurement) results, a coloring program for creating colored point cloud data based on the point cloud data and the image imaged by the imaging unit 21, and a three-dimensional coordinate assignment program for assigning three-dimensional coordinates to each of pixels of the image imaged by the imaging unit 21 based on the point cloud data. The various programs are executed by the computation control unit 17 executing various processes.

The operation panel 16 is, for example, a touch panel, and serves as both the operating unit and the display unit. The operating unit is used to instruct distance measuring and change measuring conditions, such as changing an overlap amount between adjacent images. The display unit is used to display the distance measuring results and images.

The distance measuring unit 19 will be described next. The light projecting unit 28 of the distance measuring unit 19 has a light projecting optical axis 32. The light projecting unit 28 includes, in order from a light emitting side, a light emitting unit provided on the light projecting optical axis 32, a beam splitter 34, the reflection prism 25 provided on a transmission optical axis of the beam splitter 34, and the first concave lens 26a provided on a reflection optical axis of the reflection prism 25.

In the present example, the light projecting optical axis 32, the light projecting optical axis 32 transmitted through the beam splitter 34, and the light projecting optical axis 32 reflected by the reflection prism 25 are collectively referred to as the light projecting optical axis 32. In the present example, an optical axis transmitted through the beam splitter 34 and coinciding with a light receiving optical axis 35 (described later) is referred to as the light projecting optical axis 32.

The light emitting unit is constituted by one light emitting element 33. The light emitting element 33 is, for example, a laser diode (LD) that emits near infrared light having a predetermined wavelength, as the distance measuring light 27, at a predetermined spread angle. The light emitting element 33 may be disposed so that the optical axis of the distance measuring light 27 coincides with the light projecting optical axis 32. The light emitting element 33 may be disposed so that the optical axis of the distance measuring light 27 is parallel to the light projecting optical axis 32 and so that the distance between the optical axes is a known distance.

The beam splitter 34 has optical properties of transmitting the distance measuring light 27 and reflecting the reflected distance measuring light 29. The transmission optical axis of the beam splitter 34 coincides or substantially coincides with the shaft center 11a.

The reflective surface 25a reflects the distance measuring light 27 at a right angle, and the first concave lens 26a expands a diameter of the distance measuring light 27 so that the distance measuring light 27 has a predetermined spread angle (measurement range).

The first concave lens 26a has optical properties such that the focal position (an entrance pupil position 20) when receiving the reflected distance measuring light 29 coincides or substantially coincides with the mechanical center (a point cloud acquisition origin 23) of the surveying device main body 3. In the present example, the spread angle of the first concave lens 26a is 75°. The distance measuring unit 19 can measure over a range of 75° × 75°.

When the spread angle of the distance measuring light 27 increases, the measurement range widens, but the number of acquired measurement results (point cloud density) reduces and the measurable distance also decreases. When the spread angle of the distance measuring light 27 decreases, the measurement range narrows, but the number of acquired measurement results (point cloud density) increases, and the measurable distance also increases. The spread angle of the distance measuring light 27 (optical properties of the first concave lens 26a) is appropriately designed in a range of 20° to 180° according to the distance to the object to be measured and to an intended application. The angle of the tapered portion 24 is appropriately designed in accordance with the optical properties of the first concave lens 26a and the second concave lens 26b described later.

The light receiving unit 31 has the light receiving optical axis 35. The light receiving unit 31 includes, in order from a light receiving side, a light receiving sensor 36 provided on the light receiving optical axis 35, a light receiving system lens group 37, the beam splitter 34, the reflection prism 25 provided on the reflection optical axis of the beam splitter 34, and the first concave lens 26a provided on the reflection optical axis of the reflection prism 25.

In the present example, the light receiving optical axis 35, the light receiving optical axis 35 reflected by the beam splitter 34, and the light receiving optical axis 35 reflected by the reflection prism 25 are collectively referred to as the light receiving optical axis 35.

A filter for removing external light, such as a band-pass filter, for example, may be separately provided in the optical path of the light receiving unit 31. By providing the band-pass filter, it is possible to prevent external light (background light) from being received by the light receiving sensor 36 together with the reflected distance measuring light 29.

The light receiving sensor 36 is, for example, a two-dimensional LiDAR sensor (ToF sensor) including an imaging element constituted by a large number of pixels. In the light receiving sensor 36, each light receiving element receives the reflected distance measuring light 29 and each light receiving element emits a light receiving signal. The light receiving signal output from each element includes position information on the light receiving sensor 36, and the position of each light receiving element can be specified in the light receiving sensor 36. The light receiving sensor 36 may be formed by arranging a plurality of single-element sensors.

The light receiving system lens group 37 is constituted by a plurality of concave lenses and convex lenses. The light receiving system lens group 37 causes the reflected distance measuring light 29 reflected by the beam splitter 34 to be incident on the light receiving sensor 36 at a predetermined incident angle.

The imaging unit 21 will be described next. The imaging unit 21 has an imaging optical axis 38. The imaging unit 21 includes, in order from the light receiving side, an imaging element 39 provided on the imaging optical axis 38, an imaging lens group 41, the reflection prism 25, and the second concave lens 26b provided on the reflection optical axis of the reflection prism 25.

In the present example, the imaging optical axis 38 and the optical axis incident on the reflection prism 25 and reflected so as to coincide with the imaging optical axis 38 are collectively referred to as the imaging optical axis 38. The optical path of the imaging unit 21 may include an IR cut filter for removing infrared and near-infrared wavelengths. By providing the IR cut filter, infrared or near-infrared light can be prevented from being received by the imaging element 39 together with an external light 42.

The imaging element 39 is a CCD or CMOS sensor, which is an assembly of pixels. The position of each pixel can be specified on the imaging element 39. For example, each pixel has pixel coordinates with the center of the imaging element 39 (the imaging optical axis 38) as the origin. The position of the pixel on the imaging element 39 is specified by the pixel coordinates.

The imaging lens group 41 is constituted by a plurality of concave lenses and convex lenses. In the imaging lens group 41, the external light 42 reflected by the reflective surface 25b is received by the imaging element 39 at a predetermined incident angle.

The reflective surface 25b reflects the external light 42 incident along the imaging optical axis 38 at a right angle. The second concave lens 26b condenses the external light 42 in a predetermined angle range and causes the external light 42 to be incident on the reflection prism 25.

The second concave lens 26b has the same focal distance as the first concave lens 26a. The entrance pupil position 20 at the time of receiving the external light 42 is the mechanical center of the surveying device main body 3 and coincides or substantially coincides with the point cloud acquisition origin 23 of the distance measuring unit 19. For example, the angle of view of the imaging unit 21 is appropriately set in a range of 20° to 180° so as to be the same or substantially the same as the measurement range of the distance measuring unit 19. In the present example, the angle of view of the second concave lens 26b is 75°. The imaging unit 21 has an imaging range of 75° × 75°.

The computation control unit 17 controls the distance measuring unit 19 and the imaging unit 21, respectively.

The operation of the distance measuring unit 19 will be described. The light emitting element 33 emits the distance measuring light 27 on the light projecting optical axis 32 or in parallel with the light projecting optical axis 32. For example, the distance measuring light 27 is emitted in a pulse form, is transmitted through the beam splitter 34, is incident on the reflection prism 25, and is reflected by the reflective surface 25a at a right angle. The diameter of the distance measuring light 27 reflected by the reflective surface 25a is expanded by the first concave lens 26a so as to have a predetermined spread angle and is irradiated onto the object to be measured. The distance measuring light 27 irradiates a plane parallel to the shaft center 11a. The reflection prism 25 rotates about the shaft center 11a so that the distance measuring light 27 is irradiated around the full circumference about the shaft center 11a.

The diameter of the reflected distance measuring light 29 reflected by the object to be measured is reduced by the first concave lens 26a, is incident on the reflection prism 25, and is reflected by the reflective surface 25a at a right angle. The reflected distance measuring light 29 reflected by the reflective surface 25a is reflected by the beam splitter 34 at a right angle, is transmitted through the light receiving system lens group 37, and is received by the light receiving sensor 36.

The light receiving optical axis 35 of the reflected distance measuring light 29 reflected by the reflective surface 25a is coaxial with the light projecting optical axis 32 transmitted through the beam splitter 34. The light projecting optical axis 32 and the light receiving optical axis 35 coincide with the shaft center 11a.

The computation control unit 17 measures the distance (Time of Flight) for each pulse of the distance measuring light 27, based on a time difference between a light emission timing of the light emitting element 33 and a light reception timing of the light receiving sensor 36 (i.e., the round-trip time of the pulsed light) and on the speed of light. The computation control unit 17 computes the distance to the object to be measured for each element. Each element of the light receiving sensor 36 simultaneously performs the distance measurement for each pulse, and a plurality of distance measuring results can be acquired.

By rotating the frame unit 5 and the rotation unit 15 (the reflection prism 25) at a constant speed, respectively, while emitting the distance measuring light 27 at a predetermined pulse interval, the rotation of the rotation unit 15 in the vertical direction and the rotation of the frame unit 5 in the horizontal direction work in concert to irradiate the distance measuring light 27 over the full 360° circumference. By using the vertical angle encoder 14 and the horizontal angle encoder 9 to detect the vertical angle and the horizontal angle for each pulse of light and each element, vertical angle data and horizontal angle data can be acquired for each element. Three-dimensional coordinates of the object to be measured and three-dimensional point cloud data corresponding to the object to be measured can be acquired from the vertical angle data, the horizontal angle data and the distance measurement data for each element. The acquired point cloud data is stored in the storage unit 18.

The light emission timing of the light emitting element 33, i.e., the pulse interval, can be changed via the operation panel 16.

In parallel with the distance measuring operation, the external light 42 incident on the second concave lens 26b is incident on the reflection prism 25 while being condensed (reduced in diameter) and is reflected by the reflective surface 25b at a right angle. The external light 42 reflected by the reflective surface 25b passes through the inside of the vertical rotation shaft 11 that is hollow, is transmitted through the imaging lens group 41 and is received by the imaging element 39. An image centered on the imaging optical axis 38 is acquired. The acquired image is stored in the storage unit 18.

Upon completion of the measurement by the distance measuring unit 19 and the imaging by the imaging unit 21, the horizontal rotation motor 8 and the vertical rotation motor 13 are driven. By the horizontal rotation of the frame unit 5 and the vertical rotation of the rotation unit 15 working in concert, the distance measuring unit 19 is moved to a subsequent position, and the measurement and imaging, that is, the measurement is performed again. The above-described processing is repeated until measurement and imaging of the full 360° circumference are completed. It is desirable to drive the horizontal rotation motor 8 and the vertical rotation motor 13 so that adjacent measurement results and images overlap each other within a predetermined range.

The computation control unit 17 creates colored point cloud data or an image with coordinates having three-dimensional coordinates for each pixel, based on the measurement result acquired by the distance measuring unit 19 and the image acquired by the imaging unit 21.

The reflective surfaces 25a and 25b are reflective surfaces formed on the front and back surfaces of the joint surface of the reflection prism 25. The position of the intersection point of the light projecting optical axis 32 (the light receiving optical axis 35) and the reflective surface 25a coincides or substantially coincides with the position of the intersection point of the imaging optical axis 38 and the reflective surface 25b.

The measurement result and the image acquired by the distance measuring unit 19 and the imaging unit 21 at the same timing are the measurement result and the image at positions displaced by 180° from each other. Thus, by acquiring the measurement result and the image at the positions displaced by 180° from each other based on the detection result of the vertical angle encoder 14, it is possible to match the measurement range of the distance measuring unit 19 with the imaging range of the imaging unit 21 and match the positions of the measurement result and the image.

As described above, in the first example, the distance measuring unit 19 and the imaging unit 21 are provided at symmetrical positions with the reflection prism 25 interposed therebetween. The measurement result and image at the positions displaced by 180° from each other can be simultaneously acquired via the two reflective surfaces 25a and 25b formed on the front and back surfaces of the reflection prism 25.

Therefore, since it is not necessary to separately perform the measurement and imaging at different timings, the measurement time can be shortened.

Since the distance measuring unit 19 and the imaging unit 21 are disposed so that the point cloud acquisition origin 23 of the distance measuring unit 19 and the entrance pupil position 20 of the imaging unit 21 coincide or substantially coincide with each other, parallax between the distance measuring unit 19 and the imaging unit 21 can be eliminated or significantly reduced.

As a result, a wide range of the image acquired by the imaging unit 21 can be used for coloring the point cloud data acquired by the distance measuring unit 19. Thus, coloring accuracy of the point cloud data or assignment accuracy of the three-dimensional coordinates to each pixel over the full panoramic image can be improved. An amount of overlap between adjacent images can be reduced, and the measurement time can be shortened.

The distance measuring unit 19 and the imaging unit 21, which respectively include the concave lenses 26a and 26b, can perform measurement and imaging over a range equal to or greater than the spread angle of the light emitting element 33. This can reduce the number of times measurement and imaging are performed in acquiring full panoramic point cloud data and shorten the measurement time.

Since the tapered portions 24 are formed at the edges of the recessed portion 22 of the frame unit 5, it is possible to prevent the frame unit 5 from blocking the distance measuring light 27 emitted from the first concave lens 26a and the external light 42 incident on the second concave lens 26b.

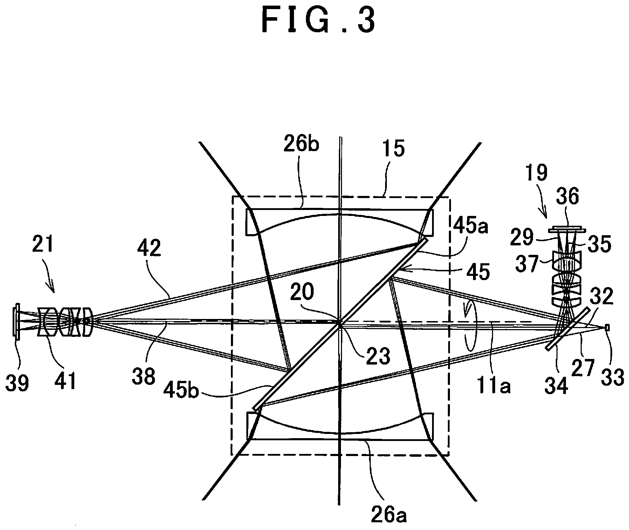

A second example of the present invention will be described with reference to FIG. 3. Note that the same reference signs are appended in FIG. 3 to equivalent parts to those in FIG. 2, and a description thereof is omitted.

In the second example, the rotation unit 15 includes a reflecting mirror 45 as the deflecting optical member. Reflective surfaces 45a and 45b are formed on a front surface and a back surface of the reflecting mirror 45, respectively.

The imaging optical axis 38 of the imaging unit 21 coincides with the shaft center 11a, and the light projecting optical axis 32 (the light receiving optical axis 35) of the distance measuring unit 19 is displaced from the imaging optical axis 38 by the thickness of the reflecting mirror 45, that is, by approximately 1 mm to 3 mm, for example. Other configurations are the same as those of the first example.

In the second example, the point cloud acquisition origin 23 of the distance measuring unit 19 and the entrance pupil position 20 of the imaging unit 21 are at positions displaced from each other by the thickness of the reflecting mirror 45. However, the thickness of the reflecting mirror 45 is approximately 1 mm to 3 mm and the amount of deviation is small. Thus, the point cloud acquisition origin 23 and the entrance pupil position 20 can be considered to substantially coincide with each other.

Therefore, the parallax between the distance measuring unit 19 and the imaging unit 21 can be reduced, and the coloring accuracy of the point cloud data or the assignment accuracy of the three-dimensional coordinates to each pixel over the full panoramic image can be improved.

In the second example, the deflecting optical member is the reflecting mirror 45 that is lightweight and inexpensive. Therefore, the weight of the rotation unit 15 can be reduced and a core deviation of the vertical rotation shaft 11 (see FIG. 1) can be suppressed. At the same time, the manufacturing costs of the surveying device main body 3 (see FIG. 1) can be reduced.

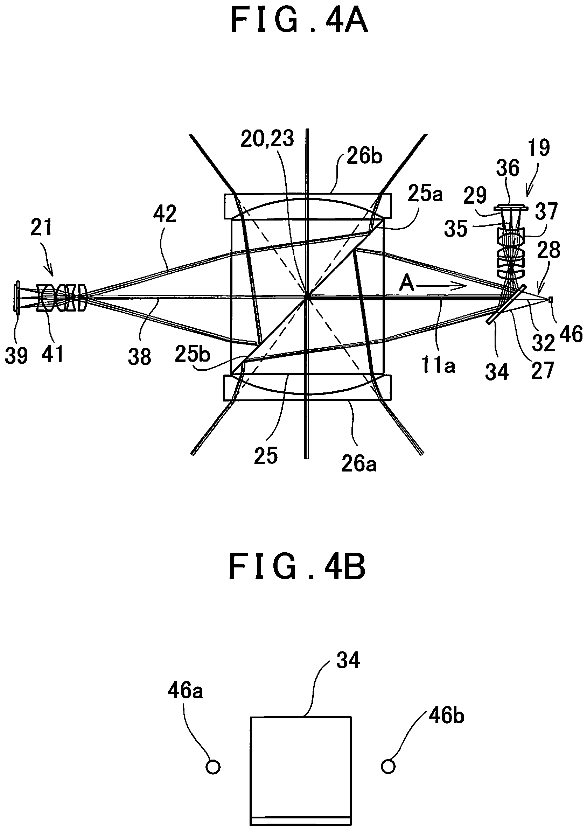

A third example of the invention will be described with reference to FIGS. 4(A) and 4(B). The same reference signs are appended in FIGS. 4(A) and 4(B) to equivalent parts to those in FIG. 2, and a description thereof is omitted.

In the third example, the light emitting unit of the light projecting unit 28 is constituted by two light emitting elements 46 (the light emitting elements 46a and 46b). Other configurations are the same as those of the first example.

Each of the light emitting elements 46a and 46b emits the distance measuring light 27. The optical axis of the distance measuring light 27 is parallel to the light projecting optical axis 32 and is disposed at a position symmetrical with respect to the light projecting optical axis 32. The distances between the respective optical axes of the distance measuring light 27 and the light projecting optical axis 32 are known.

In the third example, the light emitting unit is constitutes by the two light emitting elements 46a and 46b, and the distance measuring light 27 is also emitted from each of the light emitting elements 46a and 46b. Therefore, since a light amount of the distance measuring light 27 can be increased, a reaching distance of the distance measuring light 27 can be lengthened. At the same time, a light amount of the reflected distance measuring light 29 can be sufficiently acquired even when the measurement range is widened.

Since the point cloud acquisition origin 23 of the distance measuring unit 19 and the entrance pupil position 20 of the imaging unit 21 can be caused to coincide or substantially coincide with each other, the parallax between the distance measuring unit 19 and the imaging unit 21 can be eliminated or substantially eliminated, and the coloring accuracy of the point cloud data or the assignment accuracy of the three-dimensional coordinates to each pixel over the full panoramic image can be improved.

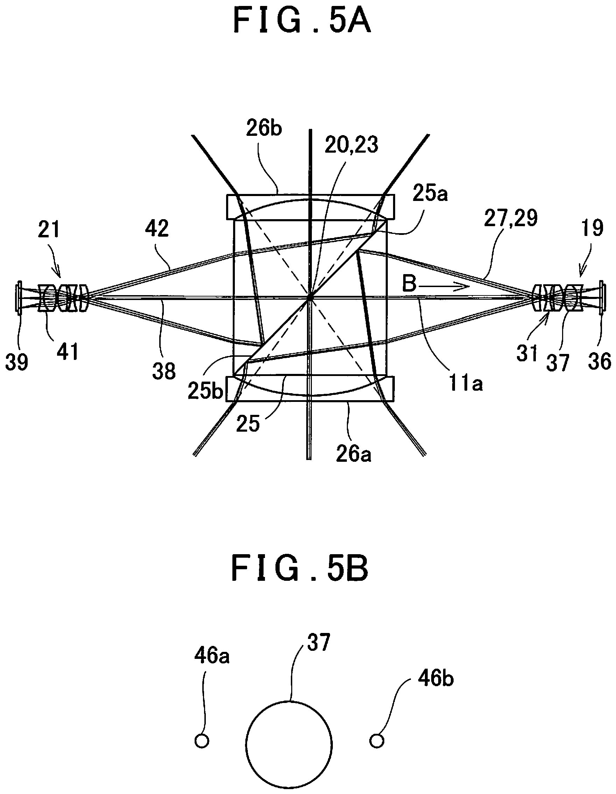

FIGS. 5(A) and 5(B) illustrate a modified example of the third example. In the modified example, the light receiving unit 31 does not include the beam splitter 34, and the reflected distance measuring light 29 reflected by the reflective surface 25a is directly incident on the light receiving sensor 36, via the light receiving system lens group 37.

The light emitting elements 46a and 46b are disposed at symmetrical positions with respect to the light projecting optical axis 32 so as to sandwich the light receiving system lens group 37 or the light receiving sensor 36. The light emitting elements 46a and 46b are desirably disposed so that the distance measuring light 27 is not received by the light receiving system lens group 37.

Also in the above-described modified example, since the light amount of the distance measuring light 27 can be increased, the reaching distance of the distance measuring light 27 can be increased to extend the measurable distance, and the sufficient light receiving amount of the reflected distance measuring light 29 can be acquired even when the measurement range is expanded.

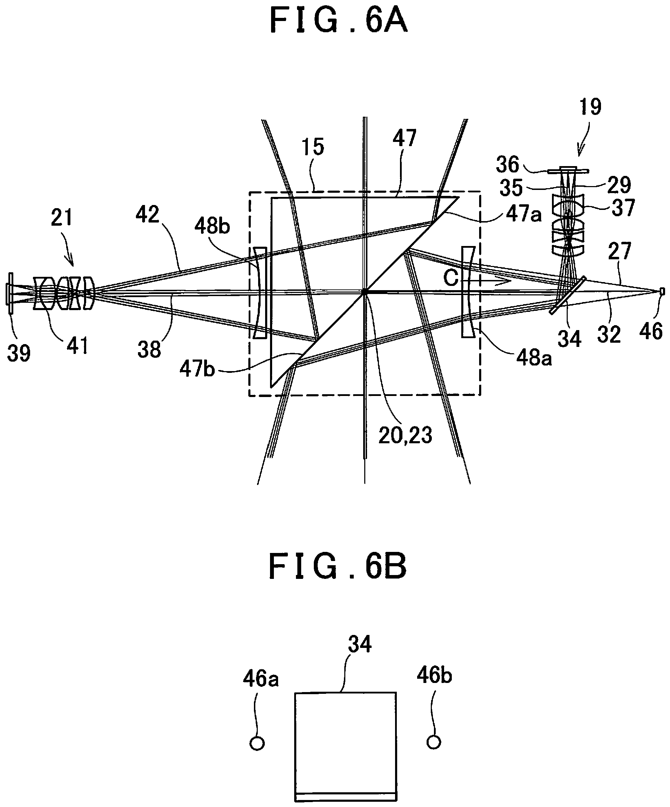

A fourth example of the invention will be described with reference to FIGS. 6(A) and 6(B). The same reference signs are appended in FIGS. 6(A) and 6(B) to equivalent parts to those of FIGS. 4(A) and 4(B), and a description thereof is omitted.

In the fourth example, a reflection prism 47 serving as the deflecting optical member is a triangular prism having a right-angled isosceles triangle shape, and reflective surfaces 47a and 47b are formed on the front and back surfaces, respectively.

A first concave lens 48a is disposed between the beam splitter 34 and the reflection prism 47, and a second concave lens 48b is disposed between the imaging lens group 41 and the reflection prism 47. The first concave lens 48a and the second concave lens 48b are each disposed closer to the light receiving side than the reflection prism 47. The reflection prism 47, the first concave lens 48a, and the second concave lens 48b constitute the rotation unit 15. Other configurations are the same as those of the third example.

In the fourth example, the first concave lens 48a is disposed at a position closer to the light receiving sensor 36 than in the third example, and the second concave lens 48b is disposed at a position closer to the imaging element 39 than in the third example. Therefore, since the first concave lens 48a and the second concave lens 48b can be reduced in size, costs can be curtailed, and the weight of the rotation unit 15 can be reduced.

The reflection prism 47, which is the triangular prism, can reduce the weight of the reflection prism 47 as compared with being a rectangular prism, further reducing the weight of the rotation unit 15.

Although the reflection prism 47 is the triangular prism in the fourth example, the reflection prism 47 may be a rectangular prism as in the third example. By forming the reflection prism 47 as the rectangular prism, both the reflected distance measuring light 29 and the external light 42 pass through the prism. Thus, the reflected distance measuring light 29 and the external light 42 can be deflected in the same manner.

As a result, the point cloud acquisition origin 23 of the distance measuring unit 19 and the entrance pupil position 20 of the imaging unit 21 can be caused to coincide or substantially coincide with each other, and the parallax between the distance measuring unit 19 and the imaging unit 21 can be reduced.

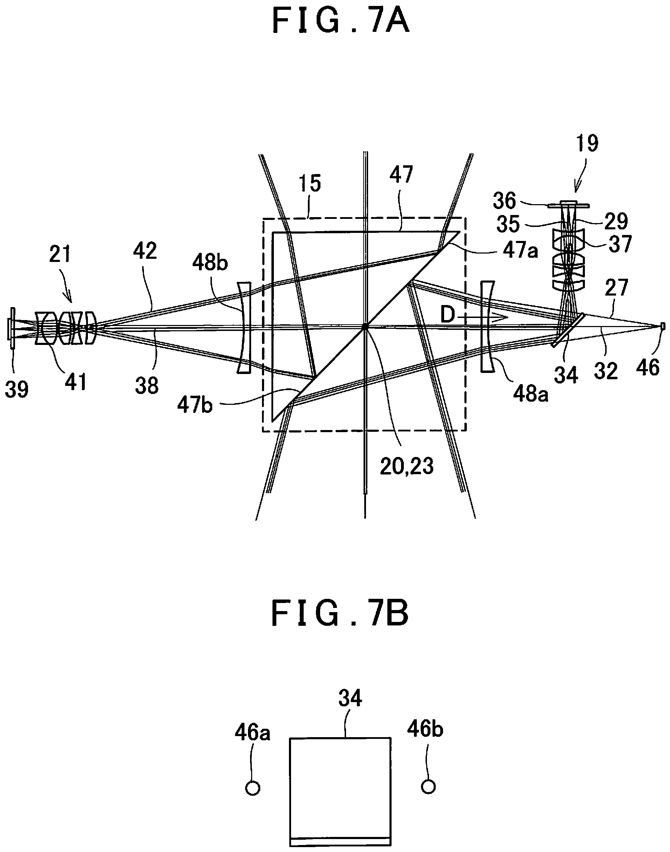

A fifth example of the present invention will be described with reference to FIGS. 7(A) and 7(B). The same reference signs are appended in FIGS. 7(A) and 7(B) to equivalent parts to those of FIGS. 6(A) and 6(B), and a description thereof is omitted.

In the fifth example, the rotation unit 15 is constituted by only the reflection prism 47. The first concave lens 48a is fixed between the beam splitter 34 and the reflection prism 47, and the second concave lens 48b is fixed between the imaging lens group 41 and the reflection prism 47. The first concave lens 48a and the second concave lens 48b do not rotate integrally with the reflection prism 47. Other configurations are the same as those of the fourth example.

In the fifth example, since the rotation unit 15 is constituted only by the reflection prism 47, the weight of the rotation unit 15 can be reduced, and the core deviation of the vertical rotation shaft 11 (see FIG. 1) can be suppressed.

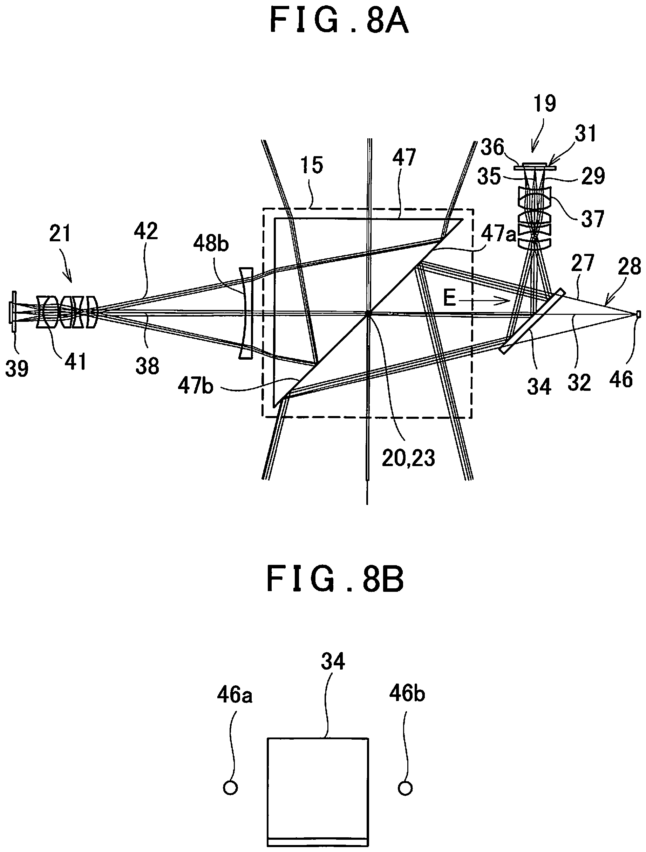

A sixth example of the present invention will be described with reference to FIGS. 8(A) and 8(B). The same reference signs are appended in FIGS. 8(A) and 8(B) to equivalent parts to those of FIGS. 7(A) and 7(B), and a description thereof is omitted.

In the sixth example, the distance measuring unit 19 does not include a concave lens for expanding the measurement range. Other configurations are the same as those of the fifth example.

In the distance measuring unit 19 of the sixth example, a concave lens, which is a transmitting component commonly used by the light projecting unit 28 and the light receiving unit 31, is omitted.

Therefore, the occurrence of return light of the distance measuring light 27 reflected by the concave lens can be suppressed. Thus, the occurrence of a distance measuring error caused by the return light being received by the light receiving sensor 36 can be suppressed, and the distance measuring accuracy can be improved.

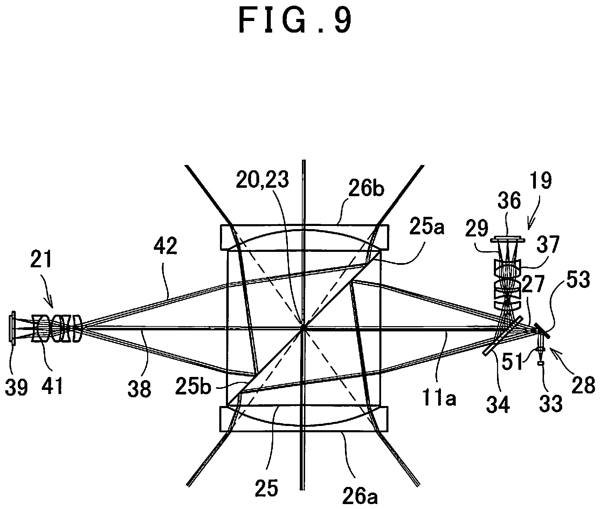

A seventh example of the present invention will be described with reference to FIG. 9. The same reference signs are appended in FIG. 9 to equivalent parts to those of FIG. 2, and a description thereof is omitted.

In the seventh example, the light projecting unit 28 of the distance measuring unit 19 includes, in order from the light emitting side, the light emitting element 33 provided on the light projecting optical axis, a collimator lens 51, an MEMS mirror 53, the beam splitter 34, the reflection prism 25 provided on the transmission optical axis of the beam splitter 34, and the first concave lens 26a provided on the reflection optical axis of the reflection prism 25. Other configurations are the same as those of the first example.

The collimator lens 51 converts the distance measuring light 27 emitted from the light emitting element 33 into a parallel light flux. The MEMS mirror 53 is a biaxial micro electro mechanical system (MEMS) mirror and can change inclination angles in two axial directions orthogonal to each other.

Driving the MEMS mirror 53 allows the distance measuring light 27 to be scanned in two axial directions (two dimensions) within a predetermined range without driving the horizontal rotation motor 8 (see FIG. 1) and the vertical rotation motor 13 (see FIG. 1).

In the seventh example, since the distance measuring light 27 can be caused to scan in the two dimensions by driving the MEMS mirror 53, even when the irradiation range of the distance measuring light 27 is narrower than the imaging range of the imaging unit 21, the measurement range equivalent to the imaging range can be measured.

Therefore, since the spread angle of the distance measuring light 27 irradiated from the first concave lens 26a can be reduced and the received light amount of the reflected distance measuring light 29 can be increased, the reaching distance of the distance measuring light 27 can be extended and the measurable distance can be extended.

Since the spread angle of the distance measuring light 27 is reduced, the density of the point cloud acquired by the distance measuring unit 19 can be increased.

Although the MEMS mirror 53 is the biaxial MEMS mirror in the seventh example, two uniaxial MEMS mirrors may be provided so that the distance measuring light 27 can be caused to scan in the two axial directions.

Further, it goes without saying that the deflecting optical member, the wide-angle optical member, the light emitting unit, and the like in the first to seventh examples can be appropriately combined other than the combinations of the above-described examples.

### Reference Signs List

1 Surveying device
3 Surveying device main body
17 Computation control unit
19 Distance measuring unit
21 Imaging unit
25 Reflection prism
27 Distance measuring light
29 Reflected distance measuring light
42 External light

## Claims

1. A surveying device, comprising:
a distance measuring unit including a light projecting unit configured to emit distance measuring light and a light receiving unit configured to receive reflected distance measuring light from an object to be measured;
a deflecting optical member configured to be rotated in a vertical direction via a vertical rotation shaft that is hollow;
a vertical rotation drive unit configured to rotate the deflecting optical member in the vertical direction;
a frame unit in which the deflecting optical member is provided;
a horizontal rotation drive unit configured to rotate the frame unit in a horizontal direction;
an imaging unit capable of imaging an image of the object to be measured based on external light passing through an interior of the vertical rotation shaft; and
a computation control unit configured to compute a distance to the object to be measured based on a result of reception of the reflected distance measuring light into the light receiving unit, wherein
the distance measuring unit and the imaging unit are disposed at positions facing each other with the deflecting optical member interposed therebetween,
the deflecting optical member has two reflective surfaces for reflecting the distance measuring light, the reflected distance measuring light, and the external light at right angles, and
the computation control unit simultaneously executes distance measurement via one of the two reflective surfaces and imaging via the other of the two reflective surfaces.

2. The surveying device according to claim 1, wherein the distance measuring unit and the imaging unit are disposed to cause a point cloud acquisition origin of the distance measuring unit to coincide or substantially coincide with an entrance pupil position of the imaging unit.

3. The surveying device according to claim 1 or 2, wherein the distance measuring unit further includes a beam splitter configured to transmit the distance measuring light and reflect the reflected distance measuring light.

4. The surveying device according to claim 1 or 2, further comprising
a second concave lens configured to reduce a diameter of the external light, wherein
an imaging range of the imaging unit is enlarged via the second concave lens.

5. The surveying device according to claim 4, further comprising
a first concave lens configured to increase a diameter of the distance measuring light, wherein
a measurement range of the distance measuring unit is enlarged via the first concave lens.

6. The surveying device according to claim 5, wherein the first concave lens and the second concave lens are each disposed closer to the object to be measured than the deflecting optical member and rotate integrally with the deflecting optical member.

7. The surveying device according to claim 5, wherein the first concave lens and the second concave lens are each disposed closer to a light receiving side than the deflecting optical member.

8. The surveying device according to claim 7, wherein the first concave lens and the second concave lens rotate integrally with the deflecting optical member.

9. The surveying device according to claim 1, wherein the distance measuring unit is a two-dimensional distance measuring sensor capable of acquiring distance measurement data in a planar manner.

10. The surveying device according to claim 9, wherein
the distance measuring sensor is a flash LiDAR, and
the light projecting unit includes at least one light emitting element configured to emit the distance measuring light.

11. The surveying device according to claim 2, wherein the light projecting unit further includes an MEMS mirror capable of deflecting the distance measuring light in two axial directions.

12. The surveying device according to any one of claims 1 to 11, wherein
the deflecting optical member is a rectangular prism obtained by joining two triangular prisms, and
respective reflective surfaces are formed on front and back surfaces of a joint surface of the rectangular prism.

13. The surveying device according to any one of claims 1 to 11, wherein
the deflecting optical member is a triangular prism having a right-angled isosceles triangle shape, and
respective reflective surfaces are formed on front and back surfaces of the triangular prism on its long side.

14. The surveying device according to any one of claims 1 to 11, wherein
the deflecting optical member is a mirror having a plate shape, and
respective reflective surfaces are formed on front and back surfaces of the mirror.

15. The surveying device according to any one of claims 1 to 11, wherein
a recessed portion in which the deflecting optical member is housed is formed in the frame unit, and
a tapered portion cut in a tapered shape is formed at an edge portion of the recessed portion.
